Europäisches Patentamt

European Patent Office

Office européen des brevets

(11) Publication number: **0 262 831**
**A1**

## (12) EUROPEAN PATENT APPLICATION

(21) Application number: 87308113.7

(22) Date of filing: **15.09.87**

(51) Int. Cl.⁴: **B60J 1/02** , C08L 23/22

(30) Priority: **15.09.86 IE 2453/86**

(43) Date of publication of application:
**06.04.88 Bulletin 88/14**

(84) Designated Contracting States:
**AT BE CH DE ES FR GB GR IT LI LU NL SE**

(71) Applicant: **SHARAWAY LIMITED**
**Dun Fanoir The Hill Stillorgan Road**
**Blackrock County Dublin(IE)**

(72) Inventor: **Martin, Hugh Anthony**
**Darthogue 4 Corrig Road**
**Dun Laoghaire County Dublin(IE)**

(74) Representative: **Behrens, Clemency Anne**
**Susan**
**c/o CAS Behrens & Co Birstwith House**
**Birstwith Harrogate North Yorkshire HG3**
**2NG(GB)**

(54) **Method of heat-curing, method of glazing, and kit therefor.**

(57) A method is disclosed for heat-curing an adhesive which comprises enclosing an electrical resistor, such as a resistance wire (10), in the adhesive with its ends (11) exposed, and sending an electric current through the resistor effective to cure the adhesive. The method is suitable in particular for adhesively securing replacement windows and windscreens in motor vehicles The resistance wire (10) used is preferably coated with a tacky substance so that it remains in position after placement, pending application of the adhesive to envelop the coated wire (5). A kit is also disclosed for use in windscreen replacement comprising a length of the coated resistance wire (5) helically wound on a hollow cylindrical core (30) with its adjacent windings out of mutual contact, and a dispensing cartridge (12) of the adhesive which can be accommodated inside the cylindrical core (30) to save space, the whole being presented in a package (26) with a dispensing nozzle (25) and a phial of liquid primer.

FIG.2

FIG.7

EP 0 262 831 A1

## METHOD OF HEAT-CURING, METHOD OF GLAZING, AND KIT THEREFOR.

This invention relates to a method of heat-curing a polymerizable composition for use (when cured) as an adhesive or a sealant. More specifically, it relates to improvements in vehicle windscreen and window fitting. In particular it relates to a method of fitting replacement vehicle windscreens and other glass panels into their respective rebated openings in the bodywork of a vehicle such as an automobile, and to a kit of components for use in the method.

It has long been customary to place or adhesively secure a U-section resilient gasket (eg of rubber) in a rebated opening in a vehicle bodywork to form a housing for a windscreen or other glass panel the edge of which is inserted into the slot formed by the limbs of the U in section. Glass panels and gaskets secured in this way can be dislodged if the vehicle undergoes violent negative acceleration eg due to impact in an accident. The glass panels are not intended as structural members and do not contribute significantly to the mechanical integrity or rigidity of the bodywork.

More recently the practice has arisen of securing the glass panels directly into the openings by adhesive means without the use of a gasket. Butyl rubber-based sealant-adhesives are commonly used for this purpose. They are thermoplastic, and they secure substrates together by congealing in contact after having been melted or softened by heat. A butyl rubber sealant-adhesive composition is formed into a solid flexible strip of constant cross-section by preparing a hot melt and extruding it into a water bath. By feeding resistance wire from a reel into the centre of the extrusion nozzle during this procedure, the sealant strip acquires a resistance wire core. The strip can be cut to a suitable length for securing a given size of windscreen, and then wrapped and packaged. In use of the strip, the composition is removed from a short length at each end of the strip, to leave the resistance wire protruding. The strip is then positioned in and along the bodywork rebate in the screen orifice of a vehicle and a glass screen placed thereon and pressed home. A heating current is fed through the wire for long enough to melt the composition by heat generated within the strip. The composition then congeals in contact with the rebate and the glass. This method has been widely used both in vehicle manufacture and the auto glass replacement industry.

Another practice which has grown up about the same time is the omission of the previously common supporting pillars from the bodywork around or between the glazing openings, thus reducing the rigidity of the roof envelope. This in turn has promoted the fixed windows including the windscreens to the rank of structural members without which the roof envelope is insufficiently rigid and indeed dangerously liable to crumpling failure in the event of the vehicle turning over in an accident. It has become essential to provide very high strength adhesive bonds so that there is no likelihood whatever of dislodgement of eg a windscreen in an accident situation, and so that the fixed windows and in particular the front and rear screens substitute for the earlier supporting pillars in protecting the roof envelope from crumpling failure.

Some sixty percent of all motor cars at present (1986) on the roads are glazed on the principle last described above, and it is estimated that the proportion will have reached 90% in five years' time. The provision of adhesive bonds of extremely high strength and reliability is thus a matter of vital importance.

Neither butyl rubber-based nor neoprene-based adhesives give bonds strong enough to meet these requirements, and they are no longer used by vehicle manufacturers in vehicles without supporting pillars. The danger associated with their use is such, in fact, that the vehicle manufacturers have recently found it prudent to circularize the windscreen replacement firms warning them to avoid the use of such compositions on safety grounds.

Polyurethane-based compositions have been found adequately strong, and are nowadays widely used in the vehicle manufacturing industry. These compositions cure slowly under the catalytic action of atmospheric moisture, taking two to three days to reach an acceptable bond strength. This is a satisfactory state of affairs in vehicle assembly, where a cure time of two to three days can be arranged without difficulty. A problem arises however in the windscreen and window replacement industry where speed of cure is essential if vehicles are to be returned to service within an acceptable time.

Polyurethane however is also a thermosetting resin and compositions based on it can be adapted for rapid heat cure by the addition of known cure accelerating substances. This is of little interest to vehicle manufacturers because they do not work under the time constraints that apply in the replacement industry. It is of great interest to the latter industry, especially if the problem of applying heat to the composition could be solved. But it is not possible to form an uncured strip of polyurethane sealant-and-adhesive composition, analogously to the practice with butyl rubber-based compositions having a resistance wire

2

core. In the use of liquid or semi-liquid polyurethane-based compositions, infra-red radiating heaters have been used as a heat source, but their use is costly and tends to damage the adjacent paintwork of the vehicle. The use of blow-heaters and heating pads has similar drawbacks. Known heating methods suffer also from giving a non-uniform, patchy heat-treatment to the composition.

The invention seeks, among its objects, to solve these problems by providing a method of heat-curing a polymerizable composition for use (when cured) as an adhesive or a sealant, wherein the adhesive composition is cured substantially to its full strength in a very short time, which may be measured in minutes rather than hours or days. A second object is to provide a method of securing a pane of glass or other glazing material into a frame or opening, along a predetermined locus. Another object of the invention is to provide a method of fitting replacement windscreens and other fixed glass panels into a vehicle using a polyurethane-based sealant-and-adhesive composition. A further object of the invention is to provide a method of heat-curing gel or paste-like polyurethane compositions in situ.

The invention accordingly provides a method of heat-curing a polymerizable composition for use (when cured) as an adhesive or a sealant, which method is characterized by

disposing the composition and an electrical heating resistor on a first substrate, in intimate mutual contact, preserving free terminals at the ends of the resistor, applying a second substrate to the first, with the composition and resistor between them, and sending an electric current through the resistor effective to cure the composition.

More specifically, the invention provides a method as set out above, for securing a pane of glass or other glazing material into a frame or opening, along a predetermined locus, which method is characterized by

applying to the locus an elongate charge of a heat curable adhesive and/or sealing composition, and, in intimate contact therewith, a length of electrical resistance wire, allowing the ends of the wire to project free for electrical connection purposes,

bedding the pane in the composition in its intended position, and

sending an electric current through the wire effective to cure the composition.

Preferably the pane is a vehicle windscreen or window and the locus is the floor of a rebate provided in the vehicle bodywork peripheral to an opening therein. The composition is preferably based on polyure-thane.

The resistance wire may be simply deposited on the charge of composition following the course of the latter, and if so is desirably applied with a certain firmness so that it partly or wholly sinks beneath the surface of said composition. Alternatively the resistance wire may first be positioned along the rebate in the bodywork, and secured thereto at intervals, and the charge of thermosetting composition afterwards applied to the rebate so as to envelop the wire apart from its protruding ends.

A useful refinement is to provide small spaced apart self-adhesive anchoring blocks to the rebate, each block being adapted to grasp the resistance wire, by which procedure the resistance wire is spaced apart one or two millimeters from the floor of the rebate. This ensures that the resistance wire is buried within the thickness of the applied layer of composition to centralize the heating effect. Such anchoring blocks may be, for example, small discs of rubber each having two opposite faces, namely an adhesive face for attaching the disc to the rebate and an incised face for grasping the wire by the resilience of the sides of a slit thereon. The anchoring blocks are disposed so that the slit in each block follows the intended course of the resistance wire.

Another and more preferred refinement is to pre-coat the resistance wire with a small thickness of a tacky substance, such as a butyl rubber composition. This allows the wire to be adhesively positioned in continuous fashion on and along the rebate exactly where it is required, besides effectively spacing the actual wire apart from the rebate to guard against short circuits to the bodywork. The thermosetting composition is then applied over and around the butyl rubber-coated resistance wire. Anchoring blocks become redundant.

With a suitable choice of accelerator, and by means of heat generated in the wire, a polyurethane-based composition can be cured in a matter of several minutes to form a tough reliable adhesive bond between glass panel and vehicle bodywork, so that the glass panel functions, in as short a time as 30 minutes thereafter, as a structural member strong enough to protect the vehicle occupants from injury by crushing if the vehicle overturns.

Replacement glass panels as supplied for vehicles usually have their edge regions coated with a black finish, giving a neat appearance to the finished job, since the black region masks the cured composition. For certain car models a metallic or plastics trim is applied additionally to the join between the bodywork and the periphery of the glass panel, improving the appearance of the finished replace ment. The method of the invention is applicable to such panels and to such car models. The method of the invention can also be applied to vehicle glazing in the assembly industry, although it was developed with the replacement industry in mind.

The invention will be appreciated in greater detail from the following description of a particular and preferred embodiment thereof, given by way of example only with reference to the accompanying drawings, in which

Fig 1 is a perspective view of part of a windscreen rebate in the shell of a motor vehicle, in which a butyl rubber-covered resistance wire is anchored by direct adhesion;

Fig 2 is a perspective view of a larger region of the rebate of Fig 1, illustrating the application of a charge of adhesive composition thereto;

Fig 3 is a cross section of the rebate of Figs 1 and 2 following the application of a replacement windscreen thereto;

Fig 4 is a perspective view of the replaced windscreen in situ, incorporating a simplified circuit diagram of the heat curing equipment; and

Figs 5 to 8 illustrate a kit for use in performing the method of the invention, in successive stages of manufacture of said kit.

Referring now to the drawings, a motor vehicle 1, following an accident, requires a replacement windscreen 2. The windscreen opening 3 is defined by a peripheral rebate 4, from which all broken glass and adhesive composition residues are first carefully removed, care being taken as far as possible to preserve the bodywork finish in the rebate. The cleaned rebate is coated with a commercial silane liquid primer, as is the surface region of the windscreen 2 which is to come in contact with the adhesive.

A length of resistance wire 10, viz 0.508 mm Telcalloy 95/5 DGC silicone varnished wire with a protective outer winding of terylene thread, coated with tacky butyl rubber to an overall diameter of 3mm, is disposed along the rebate 4, smoothly and without kinking, and is manually pressed into adhesive engagement, its free ends 11 being allowed to protrude outwardly of the rebate 4. The wire 10 is thus disposed out of direct contact with the rebate by a spacing of about 1.5 mm. Telcalloy is a trade mark.

A dispensing cartridge 12 containing a polyurethane-based sealing and adhesive composition (to be described later) is loaded into a cartridge gun (not shown). The dispensing nozzle has an aperture adapted to extrude a bead 14 of sealant of 9 mm diameter. With the aid of the gun, a ribbon 15 of the sealant is applied to the rebate 4 along the line of the wire 10, enveloping the latter. The windscreen 2 is now carefully placed in the rebate 4 and bedded down upon the ribbon 15 of adhesive. The ribbon is thereby flattened to give an adhesive bed 16 which covers substantially the whole of the floor of the rebate 4.

An electrical transformer 17 with its primary connected to a 230 V AC power source 18 has its secondary connected to the protruding ends 11 of the wire 10 to complete the secondary circuit. The secondary output is 11 A at 28 V giving approximately 300 W of heating power in the wire 10. Heating is continued for 20 minutes, after which time the current is switched off and the terminals 11 disconnected and tucked away under the windscreen. The temperature maintained for the heating period is approximately 100°C in the centre of the ribbon 15, falling off towards the edges thereof, but is adequate for curing the composition.

The windscreen 2 is found to have been secured in place with sufficient strength for all its purposes including normal driving of the vehicle. A strip 19 of chrome or rubber cover-up trim is applied to cover the gap between the windscreen 2 and the bodywork.

The adhesive composition used is made up as follows.

| Ingredients | Parts by weight |
|---|---|
| Polyurethane pre-polymer | 60 |
| Plasticiser | 8 |
| Solvent | 20 |
| Carbon black | 10 |
| Accelerator | 2 |
| | 100 |

These ingredients are conventional. The solvent is a mixture of xylene and a commercial product called Solvesso 100, and the accelerator is a commercial product marketed by Chemie Limited of the United Kingdom under the trade name Accelerator AK 20. Solvesso is a trade mark.

The polyurethane, plasticiser and solvent are mixed for approximately 45 minutes. The carbon black is added and mixing continued until the mixture is a uniform black. The accelerator is then added with further mixing.

The ingredients are placed in a stainless steel mixing bowl and mixed under vacuum. The mixed compound is then removed and filled into cartridges by means of a commercial filling machine. The cartridges are sealed. The consistency of the composition is such that a bead of 8 or 9 mm diameter placed on a car body remains in position and does not run or sag under gravity. The composition is stored in sealed cartridges to protect it from atmospheric moisture which would otherwise cause it to cure slowly.

A provision of the invention is a kit for glazing vehicles, comprising a dispensing cartridge, a charge of polyurethane sealing-and-adhesive composition contained in the cartridge, a length of terylene or cotton thread-coated resistance wire in excess of the length of the periphery of a glazing sheet to be fixed, additionally coated with butyl rubber, and a small quantity of primer.

The cartridge 12 is designed as a piston and cylinder with its outlet neck closed by a screw cap 28 which must be removed before the dispensing nozzle 25 is applied. The cartridge 12 is actuated in use by means of a hand-held skeleton cartridge gun (a "mastic gun") which facilitates the manual application of pressure to the piston to discharge the sealant composition through the nozzle. These provisions are conventional.

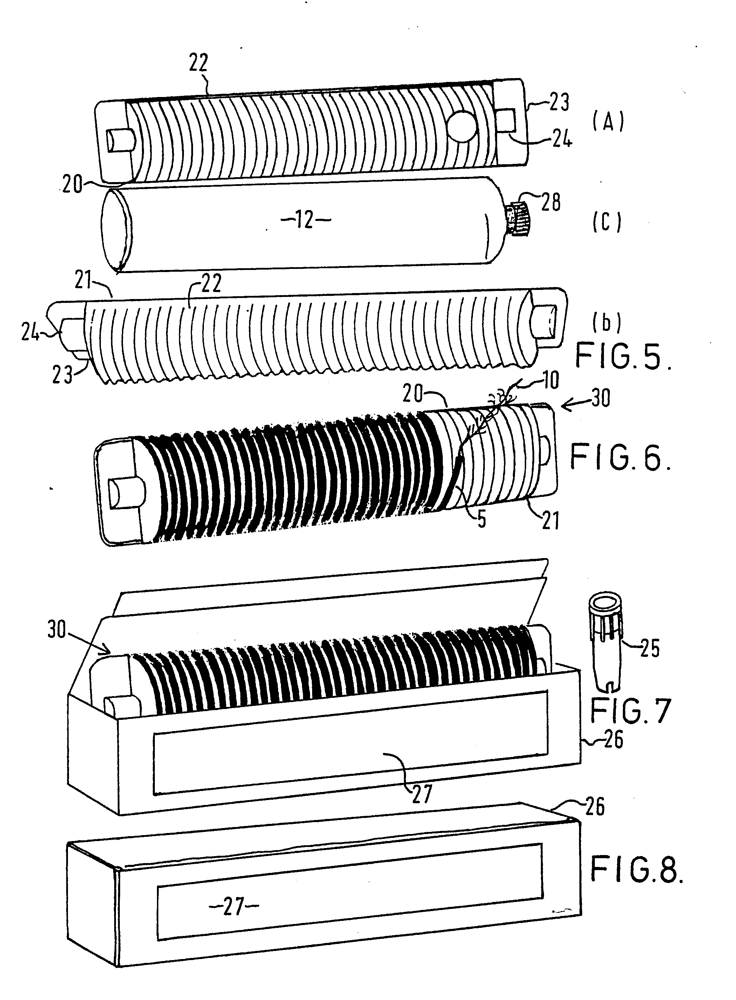

Referring now to Figs 5-8, the invention also provides a kit for use in glazing vehicles, which comprises a length of butyl rubber-coated, terylene or cotton thread-wound resistance wire 5 in excess of the length of the periphery of a glazing sheet to be fitted, a thin plastics shell 30 on which the coated wire 5 is wound, a cartridge 12 of thermosetting adhesive composition, a detachable nozzle 25 for the cartridge 12, a small phial (not shown) of priming liquid, and a packaging container 26 to contain all said components.

The plastics shell 30 comprises a first and a second hollow semicylinder 20, 21 (Figs 5a and b) which can be assembled around the cartridge 12 (Fig 5c) to form the shell 30 (Fig 6). Each semicylinder 20, 21 has a flat flange 23 at either end, in an axial plane, with a moulded hollow semicylindrical formation 24 thereon, and bears an array of circumferential ribs defining between them grooves 22. The disposition of the grooves 22 differs slightly as between the semicylinders 20, 21 in such a way that the assembled shell 30 bears a continuous helical groove beginning at one end of the shell 30 and ending at the other end thereof, in the manner of a screw thread. Along and within said groove the length of coated wire 5 is wound and removably adheres, by the tackiness of its butyl rubber coat. The ribs space the turns of wire apart so that adjacent turns do not stick together and the length of coated wire 5 can be conveniently unwound by hand when needed.

The flanges 23 lie face to face in the assembled shell 30, and the formations 24 combine in pairs to yield axial pivot stubs by means of which the shell 30 can be grasped in the chucks of a lathe-like winding machine for automatic winding-on of the coated resistance wire. The wire is fed from a reel centrally through the orifice of a gun through which the butyl rubber composition is extruded with the wire as a core, during manufacture. The fully loaded shell 30, with the cartridge 12 inside, is sheathed in greaseproof paper and packed in the packaging container 26, in this case a cardboard box, together with the nozzle 25, the phial (not shown) of priming liquid, and an instruction leaflet. Alternatively the instructions for use can be included in a product label 27 pasted or directly printed onto the box.

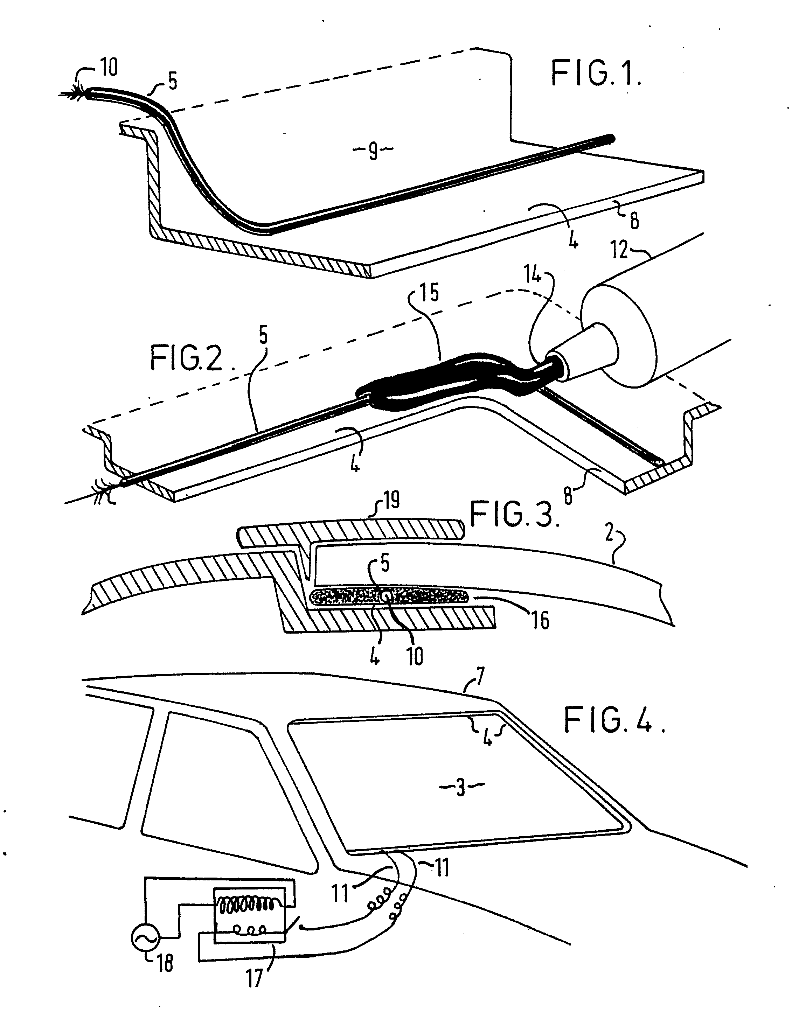

A current source eg the transformer 17 (Fig 4) is not normally provided with the kit but is kept in a repair shop where replacement glazing units, such as windscreens, are stored.

In use, to replace a window or windscreeen in a vehicle, after the empty rebate has been cleaned, the priming liquid is applied from the phial to said rebate and to the edge region of the inner face of the new or replacement window or windscreen. The loaded shell 30 is taken from the container 26, the protective greaseproof paper is removed from around it, and the coated wire 5 is then unwound from said shell and secured to said rebate in one substantially continuous operation.

The protruding ends 11 (Fig 4) are stripped of butyl rubber (this can be done by pulling between finger and thumb). Optionally, insulating sleeves of plastics can be slipped over said ends 11 to prevent accidental contact with metal parts of the bodywork, leaving only short terminals free for connection to the transformer 17. Such sleeves can of course also be provided as part of the kit.

The empty shell 30 is now broken into its two halves 20, 21 which are discarded, thus releasing the container cartridge 12. The screw cap 28 is removed and the dispensing nozzle 25 applied. A "mastic gun" is applied and the contained composition extruded on to the flange 4 to envelop the waiting coated wire 5. The remaining procedure is as described above.

A kit or two according to the invention can be carried in a vehicle, such as a touring coach or a transport truck, as a routine precaution against delay occasioned by eg a smashed windscreen in an area where the local vehicle glazing shop is not similarly equipped. Thus valuable time can be saved eg on package tours and with delivery schedules where train or boat connections have to be made, or other time deadlines met.

## Claims

1. A method of heat-curing a polymerizable composition for use (when cured) as an adhesive or a sealant,
which method is characterized by
disposing the composition and an electrical heating resistor (10) on a first substrate (4), in intimate mutual contact,
preserving free terminals (11) at the ends of the resistor, applying a second substrate (2) to the first, with the composition and resistor (10) between them, and sending an electric current through the resistor effective to cure the composition.

2. A method according to claim 1, for securing a pane (2) of glass or other glazing material into a frame or opening (3), along a predetermined locus (4),
which method is characterized by
applying to the locus (4) an elongate charge (15) of a heat curable adhesive and/or sealing composition, and, in intimate contact therewith, a length of electrical resistance wire (10),
allowing the ends (11) of the wire to project free for electrical connection purposes,
bedding the pane (2) in the composition in its intended position, and
sending an electric current through the wire effective to cure the composition.

3. A method according to claim 1, wherein the pane (2) is a vehicle windscreen or window and the locus (4) is the floor of a corresponding rebate provided in the vehicle bodywork peripheral to an opening (3) therein.

4. A method according to any of claims 1 to 3, wherein the composition is based on polyurethane.

5. A method according to any of claims 1 to 4, wherein the resistor (10) and the composition are applied separately to at least one substrate (4).

6. A method according to any of claims 2 to 4, wherein the resistance wire (10) is provided for use in the form (5) of a core inside a coating of a tacky substance capable of adhering to the substrate.

7. A method according to claim 6, wherein the tacky substance is a butyl rubber composition.

8. A kit for use in performing the method according to claim 6 or 7, which comprises a length of coated electrical resistance wire (5) wound onto a former (30), as a coil, with adjacent windings out of mutual contact.

9. A kit according to claim 8, characterized in that the heat-curable composition is provided in a cartridge (12) contained inside the former (30) which is hollow.

10. A kit according to claim 11, wherein the loaded former (30) is covered with a disposable protective layer or film to facilitate storage and handling.

FIG.1.

FIG.2.

FIG.3.

FIG.4.

FIG.5.

FIG.6.

FIG.7

FIG.8.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | US-A-3 756 881 (S.A. DENMAN) * Abstract; column 3, lines 1-10 * --- | 1-10 | B 60 J 1/02 C 08 L 23/22 |
| Y | US-A-3 263 268 (J.H. FLAHERTY) * Column 1, line 14 - column 6, line 54 * --- | 1-10 | |
| X | DE-B-1 296 987 (BITUMEN INDUSTRIES) * Whole document * --- | 1-10 | |
| A | US-A-3 649 438 (J. WALKER et al.) * Abstract * ----- | 1 | |

TECHNICAL FIELDS
SEARCHED (Int. Cl.4)

B 60 J
C 08 L

The present search report has been drawn up for all claims

| Place of search | Date of completion of the search | Examiner |
|---|---|---|
| THE HAGUE | 23-12-1987 | GOOVAERTS R.E. |

EPO FORM 1503 03.82 (P0401)